# EUROPEAN PATENT APPLICATION

(11) **EP 4 733 156 A1**
(43) Date of publication of application: **29.04.2026**
(21) Application number: 25204549.7
(22) Date of filing: 25.09.2025
(51) Int. Cl.: B60T 11/21, B62D 11/08

(54) **DUAL BRAKE VALVE**

(30) Priority: 25.10.2024 US 202418926884
(71) Applicant: ZF Off-Highway Solutions Minnesota Inc., North Mankato, MN 56003-2507 (US)
(72) Inventor: Backes, Peter, North Mankato, 56003 (US)
(74) Representative: ZF Friedrichshafen AG

(57) **Abstract**

The present disclosure relates to a dual brake valve (10) configured to actuate two brakes of a vehicle. The dual brake valve (10) comprises a pressure input (13), a first brake pressure output (26) for actuating a first brake (104) and a second brake pressure output (46) for actuating a second brake (106). The dual brake valve (10) further comprises a first valve (24) fluidly connected to the pressure input (13) and configured to pressurize the first brake pressure output (26). The dual brake valve further comprises a second valve (44) fluidly connected to the pressure input (13) and configured to pressurize the second brake pressure output (46). The dual brake valve further comprises a pressure balancing passage (16) configured to bidirectionally fluidly connect the first valve (24) and the second valve (44) to balance a pressure between the first brake pressure output and the second brake pressure output.

## Description

### Technical field

The present disclosure refers to a dual brake valve for actuating two brakes, a braking system with a dual brake valve, and a vehicle with a braking system with a dual brake valve.

### Prior art

Some vehicles comprise two independently actuatable brakes. It is known in the art to provide a balancing of these brakes when actuating both simultaneously to improve a handling of the vehicle. WO 2021/239779 A1 relates to a hydraulic arrangement for controlling front and rear brakes of a work vehicle comprising a master brake cylinder module and a source of fluid in pressure.

### Summary of the invention

The present disclosure relates in a first aspect to a dual brake valve for actuating two brakes of a vehicle. The dual brake valve may comprise two valves, being a first valve and a second valve. The two valves may be substantially identical and additionally or alternatively arranged symmetrically to one another, for example arranged mirrored to one another. The brakes may be brakes actuated by a fluid under pressure and may be actuated hydraulically and additionally or alternatively pneumatically. The brakes may be arranged on either side of the vehicle and comprise a right brake and a left brake, for example a right rear brake and a left rear brake. The brakes may comprise a front brake and a rear brake. The vehicle may be a working vehicle, such as an agricultural vehicle or a construction vehicle. In one embodiment, the vehicle is a tractor, a combine harvester, an excavator, a grader or a loader. The dual brake valve may be provided in a single unit and/or may be housed entirely in a single housing.

The dual brake valve comprises a pressure input. The pressure input may comprise a pressure input line. The pressure input line may comprise a means for transmitting a fluid under pressure, such as a channel, a tube, a pipe, a hose, a manifold and additionally or alternatively another type of conduit. The pressure input may be fluidly connected to a pressure source, for example an accumulator, such as a pneumatic accumulator or a hydraulic accumulator. Two elements that are fluidly connected may be connected in such a way that a fluid may flow from one of the elements to the other one of the elements. To be fluidly connected may comprise allowing a pressure to be shared between the two elements. The pressure at the pressure input may be higher than the pressure at other components. The pressure input may be pressurized to at least 10 bar, 20 bar, 30 bar or 50 bar. The dual brake valve comprises a first brake pressure output for actuating a first brake and a second brake pressure output for actuating a second brake. The first and second brake pressure outputs may be configured to actuate the first and second brakes by transmitting a pressure to them. The brake pressure outputs may comprise means for transmitting a fluid under pressure, such as a channel, a tube, a pipe, a hose, a manifold and additionally or alternatively another type of conduit.

The first valve is fluidly connected to the pressure input and configured to pressurize the first brake pressure output. The first valve may be configured to pressurize the first brake pressure output when actuated. The first valve may be a proportional valve. The first valve may comprise a valve with multiple ports, for example three, four, five, six, or more ports. The first valve may comprise multiple positions, for example two, three, four, five or more positions. To actuate the first valve may comprise moving it between different positions. To actuate the valve may comprise exerting a force onto the first valve. The first valve may be actuated by a user of the vehicle via a brake pedal or other braking means. Via the braking means, the user may advance an actuating member, for example a piston, which in turn engages and actuates the first valve, moving it from a first position to a different position. Which position the first valve moves to may depend on a movement of the piston and additionally or alternatively a force with which it is pushed onto the valve. A valve may additionally or alternatively be actuated by other means, such as by a pressure line acting on the valve. For example, if the first valve is being actuated more by a user than the second valve, a pressure may be directed along such a pressure line to act upon the second valve for compensation the actuation difference between the valves. The reverse, that is, directing a pressure to the first valve such that it may be actuated substantially as much as the second valve, may also be possible.

The first valve may connect different ports to each other when positioned in different positions. While different positions may comprise different physical displacements of the first valve, it is to be understood that a position primarily refers to a connecting state of a valve, which may switch between different positions without being physically displaced in its entirety. For example, the valve may change between different positions by opening or closing a connection. The first valve may comprise states between the different positions and the connections between different ports may transition gradually between positions. For example, if a connection between two ports is open in one position and closed in the next, the connection may gradually close as the first valve transitions from one position to the other.

The first valve may be connected, for example fluidly connected, to the pressure input via one of its ports. The first valve may be connected, for example fluidly connected, to the first brake pressure output via one of its ports. When the first valve is actuated, it may connect, for example fluidly connect, the pressure input with the first brake pressure output, thereby pressurizing it. The pressure input and the first brake pressure output may be disconnected when the valve is in a first position and may be connected when the valve is in a different position. For example, the pressure input and the first brake pressure output may be connected when the valve is in a fourth position. The second valve is fluidly connected to the pressure input and configured to pressurize the second brake pressure output. The second valve may be configured to pressurize the second brake pressure output when actuated. The second valve may correspond to the first valve, for example be substantially identical to the first valve. The respective advantages and features of the second valve may be taken from the description of the first valve.

The dual brake valve comprises a pressure balancing passage configured to bidirectionally fluidly connect the first valve and the second valve to balance a pressure between the first brake pressure output and the second brake pressure output. To be bidirectionally fluidly connected may mean that a fluid may flow in either direction along the pressure balancing passage. The pressure balancing passage may be free of check valves or other elements which may restrict a flow to one direction. The pressure balancing passage may comprise a means for transmitting a fluid under pressure, such as a channel, a tube, a pipe, a hose, a manifold and additionally or alternatively another type of conduit. The pressure balancing passage may be separate from the pressure input, for example comprise a separate conduit and additionally or alternatively be connected to separate ports of the first and second valves. The pressure balancing passage may be constituted by a single passage. The first valve may, depending on its position, fluidly connect the first brake pressure output to the pressure balancing passage. The connection may be a unidirectional connection or a bidirectional connection. The connection may be a bidirectional connection in some positions of the first valve and a unidirectional connection in others. To unidirectionally fluidly connect may mean that a fluid may flow from a first element to a second, but that it may not flow from the second to the first. If the first element is at a higher pressure, a fluid may then transmit the higher pressure to the second element. If the first element is at a lower pressure, the fluid may instead not transmit the higher pressure from the second element to the first. In some embodiments, this may be accomplished with a check valve. The second valve may correspondingly connect the second brake pressure output and the pressure balancing passage in the same way as the first valve connects the first brake pressure output and the pressure balancing passage.

To balance a pressure between the first and the second brake pressure output may comprise causing the pressures in the two outputs to be substantially equal. This may cause a braking force exerted by the corresponding brakes to be substantially equal. The pressures may be substantially equal if they differ by less than a threshold pressure. The threshold pressure may correspond to a pressure difference caused by a return spring of a valve. The threshold pressure may be about 1 bar, 1.5 bar, 2 bar, 5 bar or higher. The first brake pressure output and the second brake pressure output may be separated. To be separated may mean that the first brake pressure output and the second brake pressure output do not share a common conduit. To be separated may mean that no bidirectional connection may be established between the first and the second brake pressure outputs. In some embodiments of the invention, a unidirectional flow may be established between the first and the second brake outputs in some states.

This may for example occur when balancing a pressure during a release of the brakes to ensure an even braking force and will be described in more detail below.

The dual brake valve is configured to balance a pressure between the first brake pressure output and the second brake pressure output by fluidly connecting the first valve and the second valve via the pressure balancing passage such that the first valve and the second valve are actuated substantially equally. To be actuated substantially equally may comprise being actuated such that the first and second valve are moved substantially to the same position and/or states. If the first and second valve are moved to substantially the same position and/or states, they may transmit a pressure such that the first and second brake pressure outputs may be pressurized substantially equally. By providing a dual brake valve as described above, a mechanism for balancing a braking of a vehicle with two separate brakes is provided that may be particularly light, simple, compact, reliable and additionally or alternatively cheap. The provided dual brake valve may enable a provision of shorter pressure conducting paths, thereby reducing pressure losses of the dual brake valve system and increasing efficiency.

In an embodiment the dual brake valve comprises a first reaction area configured to actuate the first valve when pressurized and a second reaction area configured to actuate the second valve when pressurized. The first reaction area and the second reaction area are fluidly connectable to the pressure input. The reaction areas may be configured to exert a force onto the valves when pressurized, thereby actuating them. The force may be a force that is opposite to the force of a return spring of the valves. The force may be parallel to a force exerted by a user via actuating means onto the valve such as a brake pedal or other braking means. The first and the second reaction areas may respectively be pressurized when they are fluidly connected to the pressure input. The first and second reaction areas may be fluidly connected to the pressure input respectively via the first and second valves and additionally or alternatively via the first and second brake pressure outputs. The dual brake valve may be configured to fluidly connect the respective reaction areas to the pressure input to balance a braking. The first and second reaction areas may be configured to be depressurized when the user no longer actuates the valve, for example when the user releases a corresponding brake pedal or other braking means. By providing reaction areas fluidly connectable to the pressure input, a dual brake valve may be particularly simple, reliable, compact, light and additionally or alternatively cheap.

In an embodiment the dual brake valve comprises a first counterbalancing channel configured to counterbalance a force exerted by the first reaction area when pressurized. The dual brake valve also comprises a second counterbalancing channel configured to counterbalance a force exerted by the second reaction area when pressurized. The counterbalancing channels may comprise a means for transmitting a fluid under pressure, such as a channel, a tube, a pipe, a hose, a manifold and additionally or alternatively another type of conduit. The first counterbalancing channel may be fluidly connected to the first brake pressure output. The second counterbalancing channel may be fluidly connected to the second brake pressure output. The counterbalancing channels may be arranged at a side of the respective valves opposite to the reaction area. The reaction channels may be configured to exert a force substantially equal to the reaction areas when pressurized with an equal pressure. By providing a dual brake valve with first and second counterbalancing channels, an excessive actuation of the valves via the reaction areas may be prevented, and/or a release of the valves may be improved.

In an embodiment the dual brake valve comprises a first check valve configured to enable a flow from the first brake pressure output to the second reaction area via the pressure balancing passage. In an embodiment, the dual brake valve also comprises a second check valve configured to enable a flow from the second brake pressure output to the first reaction area via the pressure balancing passage. The check valve may enable a flow from the brake pressure output to the respective reaction area while preventing a flow in the reverse direction. The flow between the brake pressure output and the respective reaction area may additionally be enabled depending on the position of the first and second valves. For example, the first valve may not enable any flow between the first brake pressure output and the second reaction area in a first position. It may enable such a flow in the other positions, such as in the second to fourth positions, for example by opening a connection between the first brake pressure output and the pressure balancing passage in a bidirectional or unidirectional way. The first valve may be configured to block a flow from the second brake pressure output to the first reaction area in some positions and enable such a flow in other positions. For example, it may block the flow in the first and fourth positions and enable it in the second and third positions. The second valve may be configured analogously to the first valve. By providing the described check valves, a dual brake valve is provided in which the braking pressure is used for actuating the valves such that a balancing is achieved. Such a system may be particularly simple, reliable, light, compact and additionally or alternatively reliable.

In an embodiment the first check valve is configured to enable a flow from the first brake pressure output to the first reaction area and the second check valve is configured to enable a flow from the second brake pressure output to the second reaction area. Depending on the position of the first and second valves, each check valve may enable a flow from one of the brake pressure outputs to both reaction areas. In some embodiments, the first and second valves may each comprise a counterbalancing channel connected to the same port as the brake pressure outputs. The counterbalancing channels may be fluidly connected to the corresponding brake pressure outputs and therefore exhibit the same pressure. The counterbalancing channels may be configured as described above. The counterbalancing channels may be configured to cancel out the force exerted by a reaction areas when pressurized. In some embodiments, when balancing a braking, the force exerted by the reaction area of the more actuated brake may be counterbalanced by the counterbalancing channel. The force exerted by the reaction area of the less actuated brake may then not be counterbalanced, leading to a higher actuation such that the braking is balanced. By providing a connection between the brake pressure outputs and the reaction areas as described, a system which is particularly simple to balance, effective, reliable, and additionally or alternatively responsive may be enabled.

In an embodiment the dual brake valve is configured to release a pressure from the first reaction area when the first valve is released, and to release a pressure from the second reaction area when the second valve is released. To release a valve may comprise a letting go by the user of a brake pedal or other braking means. The dual brake valve may comprise a first actuating member and a second actuating member configured to respectively actuate the first and second valves. The actuating members may comprise a piston and may respectively be coupled to the brake pedal or other braking means. When the user presses the brake pedal or other braking means, the actuating member may be pushed forward, engaging the valve. The actuating members may each comprise an on/off valve which is normally open and closes when the actuating member and thereby the respective valve is actuated. The first on/off valve may be fluidly connected to the first reaction area and the second on/off valve may be fluidly connected to the second reaction area. The first and second on/off valves may be fluidly connected to a pressure output line of the dual brake valve. When the on/off valves are open, they may fluidly connect the reaction areas and the pressure output lines, thereby discharging a pressure in the reaction areas. By discharging a pressure in the reaction areas when the respective valves are released, the valves are also no longer actuated. This may lead to the pressure on the brake output lines to also be discharged, releasing the brakes. By providing the described pressure release mechanism, a safe operation of the dual brake valve is enabled which prevents unwanted pressure accumulations.

In an embodiment the first valve and the second valve are proportional valves. The first valve and the second valve may be configured such that the connections between the ports gradually transition between each other between different positions. For example, this may mean that a connection may be partially restricted when a valve is between a first position comprising an open connection and a second position comprising a closed connection. By providing the described proportional valves, a more fine-grained control of the braking may be enabled.

In an embodiment the dual brake valve is configured to balance a pressure between the first brake pressure output and the second brake pressure output only when both the first valve and the second valve are actuated. If either the first or the second valve is not actuated, no balancing may take place. In this case, only one of the two brake pressure outputs may be pressurized. Thus, the user may be enabled to only actuate one of the brakes, leaving the other disengaged. This may enable a tighter turning of a tractor and therefore more efficient land utilization.

In an embodiment the dual brake valve is configured to balance a pressure between the first brake pressure output and the second brake pressure output only when either of the first valve or the second valve is fully actuated. To be fully actuated may mean that the valve is in a most actuated and additionally or alternatively a most pushed-in position. For example, if the valve comprises four possible positions, it may comprise the valve being in the fourth position. This may be the case when the user fully or almost fully pushes in a pedal or actuates a comparable actuation means. The valve may be moved to the fourth position when the user actuates an actuation means more than a minimum amount. If the valves are proportional valves, to be fully actuated may comprise being actuated beyond the second to last position. For example, if the valves have four positions, to be fully actuated may comprise being actuated beyond the third position.

In an embodiment the dual brake valve is configured to balance a pressure between the first brake pressure output and the second brake pressure output when the first valve or the second valve is released from a state in which both the first valve and the second valve are actuated. Thus, a braking force is balanced when one or both brakes are released, ensuring a smooth and safe release. For example, a user may be engaging both brakes and then suddenly release one of them. By balancing the brake pressure outputs, dangerous swerving is prevented. In another example, a user may release both brakes but at different rates. By continuing to balance the brake pressure outputs, an even braking is ensured, improving handling, safety and comfort.

In an embodiment the first valve comprises five ports and four possible positions and the second valve comprises five ports and four possible positions. The valves may be connected to the pressure balancing channel via a first port, to the pressure input via a second port and to a pressure output via a third port. The first valve may be connected to the first reaction area via a fourth port and to the first brake pressure output and the first counterbalancing channel via a fifth port. The second valve may be connected to the second reaction area via a fourth port and to the second brake pressure output and the second counterbalancing channel via a fifth port. The valves may be configured to not transmit a pressure to the brake pressure outputs in a first position. The valves may enable a pressure balancing in a second and third position by enabling a bidirectional connection of the respective reaction areas with the pressure balancing passage. The valves may be configured to pressurize the respective brake pressure output in a fourth position by fluidly connecting them with the pressure input. In the fourth position, the valves may be configured to only enable a unidirectional connection between the respective reaction areas and the pressure balancing passage. The connection may only allow a flow from the respective reaction areas towards the pressure balancing passage.

In a second aspect, the present disclosure relates to a braking system of a vehicle comprising a dual brake valve according to the first aspect and two brakes for braking the vehicle. The vehicle may be an agricultural vehicle, for example a tractor. The respective advantages and further features can be taken from the description of the first aspect, wherein embodiments of the first aspect also form embodiments of the second aspect and vice versa. In a third aspect, the present disclosure relates to a vehicle with a braking system according to the second aspect. The respective advantages and further features can be taken from the description of the first or second aspect, wherein embodiments of the first or second aspect also form embodiments of the third aspect and vice versa.

### Brief description of drawings

Fig. 1 schematically shows a tractor with a braking system with a dual brake valve according to an embodiment of the present disclosure.
Fig. 2 schematically shows a diagram of the dual brake valve of Fig. 1.
Fig. 3 schematically shows a cross-section view of the dual brake valve shown in Fig. 2.

### Detailed description of embodiments

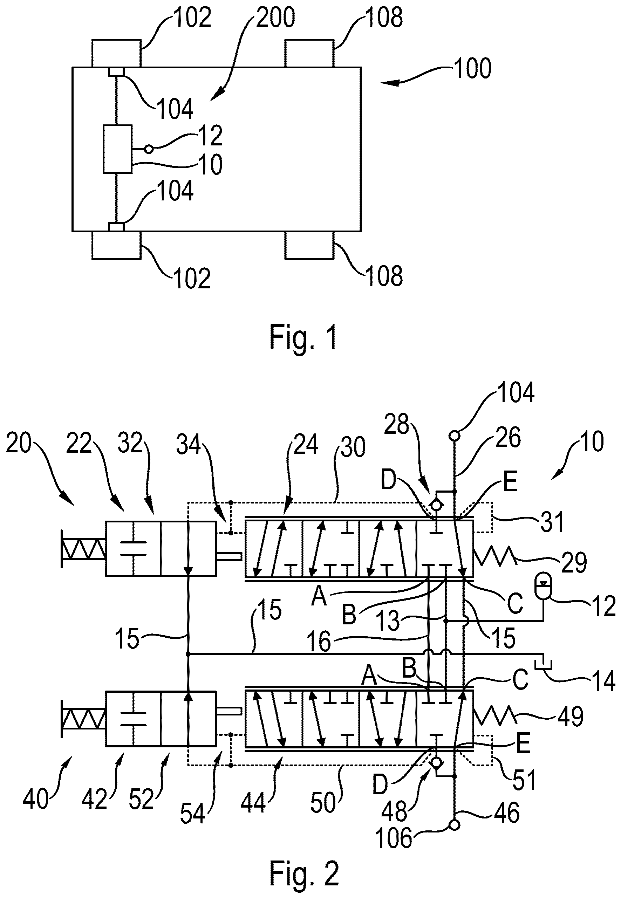

Fig. 1 schematically shows a tractor 100 with a braking system 200 having a dual brake valve 10 according to an embodiment of the present disclosure. The tractor 100 has two rear wheels 102 and two front wheels 108. The braking system 200 comprises a first rear brake 104 and a second rear brake 106 configured to each brake one of the rear wheels 102. In the embodiment shown here, the rear brakes 104, 106 are pneumatic brakes. Alternatively, the rear brakes 104, 106 may be hydraulic brakes. The braking system 200 further comprises a pressure source 12, which in the embodiment shown is a pneumatic accumulator. The dual brake valve 10 is configured to actuate the rear brakes 104, 106 by fluidly connecting them to the pressure source 12 and thereby providing them with fluid pressure. A user of the tractor, for example a driver, can actuate the brakes 104, 106 via two brake pedals not shown here. The user may actuate the brakes 104, 106 independently, only actuating one a time. In this case, the dual brake valve 10 will only transmit a pressure to one of the rear brakes 104, 106. This may enable a tighter turning of the tractor 100, enabling a more efficient utilization of agricultural land. A user may also actuate both brakes 104, 106 at the same time. In this case, the dual brake valve 10 is configured to transmit a pressure to both rear brakes 104, 106 at the same time. When actuating both brakes, the dual brake valve 10 balances the actuating pressure between them such that both brakes exert a substantially equal braking force. By balancing a braking force between both rear brakes 104, 106, unintended turning due to excessive braking on one side is prevented.

Fig. 2 schematically shows a diagram of the dual brake valve 10 of Fig. 1. The dual brake valve 10 comprises a first valve section 20, pictured above in Fig. 2, and a second valve section 40, pictured below in Fig. 2. The first and second valve sections 20, 40 are substantially identical and represent mirrored versions of each other. When describing the functions and components of the dual brake valve 10, the first valve section 20 will be described in detail. The aspects, functions and components of the second valve section 40 correspond to the ones of the first valve section 20. Like components are indicated with reference signs corresponding to each other, with each reference sign incremented by 20 for the second valve section 40 with respect to the first valve section 20.

The first valve section 20 comprises a first actuating member 22 and a first valve, provided here by a first brake valve 24. The first actuating member 22 is coupled with a pedal of the tractor 100, enabling a user to control the first rear brake 104. When the pedal is depressed by the user, it engages the first actuating member 22 and advances it, actuating the first brake valve 24. The pedal and the actuating member 22 enable control of the pressure delivered to the first rear brake 104 and thereby the braking force applied. The first actuating member 22 further comprises a normally open first on/off valve 32. The first on/off valve 32 is in the open or "on" state when the first actuating member 22 is not engaged, and is in the closed or "off" state when the first actuating member 22 is engaged. In the normally open state, it fluidly connects a first actuation channel 30 of the first valve section 20 with a pressure output line 15, enabling a pressure release. This prevents the first brake valve 24 from getting blocked in an actuated state when the corresponding pedal is not depressed. When the pedal is depressed, the first actuating member 22 changes the first on/off valve 32 to the closed or "off" state. The first on/off valve 32 thus fluidly disconnects the first actuation channel 30 from the pressure output line 15, thereby enabling a build-up of pressure in a reaction area 34, which will be described below.

The first brake valve 24 is fluidly connected to a first brake pressure output, provided here by a first brake line 26, which is configured to supply a pressure to the first rear brake 104 to effect a braking. Analogously, the second valve section 40 comprises a second actuating member 42 and a second valve, provided here by a second brake valve 44. The second brake valve 44 is fluidly connected to a second brake pressure output, provided here by a second brake line 46, which is configured to supply a pressure to the second rear brake 106 to effect a braking. Both valves 24, 44 are fluidly connected to the pressure source 12 via a pressure input line 13 and to a pressure output 14 via the pressure output line 15. Additionally, the first and the second brake valves 24, 44 are fluidly connected to each other via a pressure balancing passage 16. The pressure balancing passage 16 is configured to balance a pressure between the valves 24, 44 to enable a substantially equal actuation of the first and second rear brakes 104, 106 when both are actuated.

The first brake valve 24 is a 5/4-valve, comprising five ports A, B, C, D, E and four possible positions. The valve 24 is configured to connect the three ports A, B, C on one side with the two ports D, E on the other side. The connections between the ports A, B, C, D, E change depending on the position of the first brake valve 24. The first brake valve 24 is a proportional valve, such that the connections between positions change gradually, not abruptly. For example, if in a first position a connection between two ports is closed and in a second position the connection is open, the connection is configured to gradually open as the first brake valve 24 moves from the first position to the second position.

Port A is connected with the pressure balancing passage 16, port B is connected with the pressure input line 13 and port C is connected with the pressure output line 15. Port D is connected to the first actuation channel 30, and port E is connected to the first brake line 26. The first brake line 26 is connected to the first actuation channel 30 via a first check valve 28. The first check valve 28 is arranged to allow a flow from the first brake line 26 to the actuation channel 30, and to block a flow going in the opposite direction. Port E is additionally connected to a first counterbalancing channel 31.

The first brake valve 24 can be pushed between different positions by applying a force to it. When not being actuated, the first brake valve 24 is in the rightmost position in Fig. 2. It is biased towards this position by a first return spring 29, schematically shown arranged on the right side of first brake valve 24 in Fig. 2. The first brake valve 24 may be moved to the other positions by the first actuating member 22. The first reaction area 34 is configured to exert a force on the first brake valve 24 parallel to the first actuation member 22 and thereby actuate the first brake valve 24. The first reaction area 34 is configured to exert such a force if it is pressurized, for example via the first actuation channel 30. To balance the force exerted by the first reaction area 34, the first brake valve 24 comprises the first counterbalancing channel 31, which is configured to exert an opposite force when pressurized.

The pressurization of the first reaction area 34 and the first counterbalancing channel 31 depend on the positions of the first and second brake valves 24 and 44, as well as on the first and second actuation members 22 and 42. In some positions, the first brake valve 24 may fluidly connect the pressure balancing passage 16 with the first actuation channel 30, thereby pressurizing it and actuating the first brake valve 24. The dual brake valve 10 is configured such that, when pressure is balanced through the pressure balancing passage 16, the brake valves 24 and 44 are actuated such that they deliver substantially the same pressure to the brakes 104, 106.

The second valve section 40 is configured substantially identically to the first valve section 20. It comprises a second actuating member 42, comprising a second on/off valve 52, and the second brake valve 44. It further comprises the second brake line 46, as well as a second actuation channel 50 and second reaction area 54, which are connected by a second check valve 48. The second brake valve 44 is biased to a first position by a second return spring 49, schematically shown arranged on the right side of the second brake valve 44, and by a second counterbalancing channel 51. The components are connected between each other and function analogously to the first valve section 20.

The four possible positions of the first and second brake valves 24 and 44 will be referred to, from right to left in Fig. 2, as the first, second, third and fourth position. In the first position, ports A, B and D of the first brake valve 24 are disconnected. Port E is unidirectionally connected with port C, enabling a flow from port E to port C while blocking a flow in the opposite direction. This has the effect of connecting the first brake line 26 and the first counterbalancing channel 31 to the pressure output line 15 and thereby discharging any unwanted pressure present in those. This ensures that the first rear brake 104 is released when the first brake valve 24 is not being actuated.

In the second position, only port B is disconnected. Port A is bidirectionally connected to Port D, enabling a flow between the pressure balancing passage 16 and the first actuation channel 30 in both directions. Port C and port E are unidirectionally connected in the second position. As opposed to the first position, the connection only enables a flow in the opposite direction, that is, from the pressure output line 15 to the first brake line 26 and the first counterbalancing channel 31. The connection between ports A and D enables a pressure balancing flow between the first and the second brake valves 24, 44. If the pressure balancing passage 16 carries a higher pressure than the first actuation channel 30, the pressure on the first actuation channel 30 and the first reaction area 34 will increase, further actuating the first brake valve 24. This acts to balance a braking force effected by the brake valves 24 and 44. If the pressure on the first actuation channel 30 is higher than on the pressure balancing passage 16, the flow is reversed, increasing the pressure on the pressure balancing passage 16. Depending on the position of the second brake valve 44, this may lead to an increase of pressure on the second actuation channel 50 and the second reaction area 54. This may further actuate the second brake valve 44, increasing a pressure on the second brake line 46 and thereby balancing a baking force.

The connection between port C and port E in the second position further enables a pressurization of the first brake line 26 as well as the first counterbalancing channel 31. This connection may enable a substantially equal brake release when both the first and second rear brakes 104 and 106 are engaged and then released. When releasing the brakes, it may be the case that the pedals and/or corresponding valves are not released exactly equally. For example, the second brake valve 44 may be released, reaching the first position while the first brake valve 24 is still in the second position. If pressure is still present on the second brake line 46, a flow between it and the first brake line 26 may be established across the valves 24 and 44 and the pressure output line 15. The pressure on the first and the second brake lines 26 and 46 is then substantially equal. This ensures that the pressure on the rear brakes 104 and 106 is reduced substantially in the same amount, leading to a uniform brake force acting on the rear wheels of the tractor 100.

In the third position, ports B, C and E are disconnected, while ports A and D are bidirectionally connected, enabling a flow in either direction. The third position is the same as the second position, with the exception that the ports C and E are disconnected.

In the fourth position, port C is disconnected. Port D is unidirectionally connected to port A, and B is unidirectionally connected to port E. The connection between ports A and D enables a flow from the first actuation channel 30 and the check valve 28 to the pressure balancing passage 16. The connection between ports B and E enables a flow from the pressure input line 13 to the first brake line 26. The flow from the pressure input line 13 pressurizes the first brake line 26 and thus actuates the first rear brake 104. As the first brake line 26 gets pressurized, it may initially be at a higher pressure than the first actuation channel 30. Thus, the first check valve 28 allows a flow from the first brake line 26 to the first actuation channel 30, pressurizing it until an equal pressure is present in both. The first reaction area 34 is therefore also pressurized and exerts a force onto the first brake valve 24. The first counterbalancing channel 31 is connected to port E of the first brake valve 24 and is therefore pressurized at the same pressure as the first reaction area 34. It therefore exerts a substantially equal force onto the first brake valve 24 as the first reaction area 34. The net resulting force of the first counterbalancing channel 31 and the first reaction area 34 is thus roughly equal to zero and the valve 24 is kept in the fourth position by the force exerted by the first actuating member 22.

When the first actuating member 22 is released, for example by releasing a force on the pedal connected to first actuating member 22, the force on the first brake valve 24 is released. The first on/off valve 32 then returns to its normal open position and connects the first actuation channel 30 to the pressure output line 15, releasing the pressure from the first reaction area 34. The first brake valve 24 is thus pushed back into the first position by the spring and by the first counterbalancing channel 31. In this first position, the pressure from the first brake line 26 is released and discharged through the pressure output line 15, releasing the first rear brake 104.

The functions and positions described in relation to the first valve section 20 apply analogously to the second valve section 40.

The pressure balancing function of the pressure balancing passage 16 depends on the position of the first and second brake valves 24 and 44. When either of the brake valves 24 and 44 is in the first position, no pressure is equalized between them, as the pressure balancing passage 16 is not connected to both brake valves 24 and 44. When one of the valves 24 or 44 is fully actuated, i.e. in the fourth position, a flow between the pressure input line 13 and the pressure balancing passage 16 through the respective valve 24 or 44 is enabled. If the other valve is then partially actuated, i.e. in the second or third position, the pressure balancing passage 16 is connected to the respective reaction area 34 or 54. This has the effect of pressurizing the reaction area 34 or 54 and pushing the other valve into the fourth position, connecting the respective brake line 26 or 46 to the pressure input line 13. As a result, both brake valves 24 and 44 will be actuated substantially to the same degree, leading to a substantially equal brake actuation. Thus, the dual brake valve 10 provides a system with which both rear brakes 104 and 106 are always actuated substantially equally if both brakes are actuated. Additionally, if only one of the brakes is actuated, only that brake will be pressurized.

It should be noted that, when a brake valve 24 or 44 is actuated via such a pressure balancing, a slight difference in actuation may be present due to the influence of the first or second return spring 29 or 59. For example, a user may depress the pedal corresponding to the first valve section 20 more than the other, moving the first brake valve 24 into the fourth position. The first actuating member 22 will then push the first brake valve 24 and balance the force of the first return spring 29. The second brake valve 44 may also be pushed by the second actuation member 42, for example pushing it into the second or third position. As the pressure in the second reaction area 54 increases and pushes the second brake valve 44 further, the second actuation member 42 no longer contacts the second brake valve 44. It thus does not compensate the force exerted by the second return spring 49. The force exerted by the return springs 29 and 49 is small compared to the force exerted through the first and second reaction areas 34 and 54. The force corresponds to one exerted by a pressure of about 1.5 bar in the reaction areas 34 and 54.

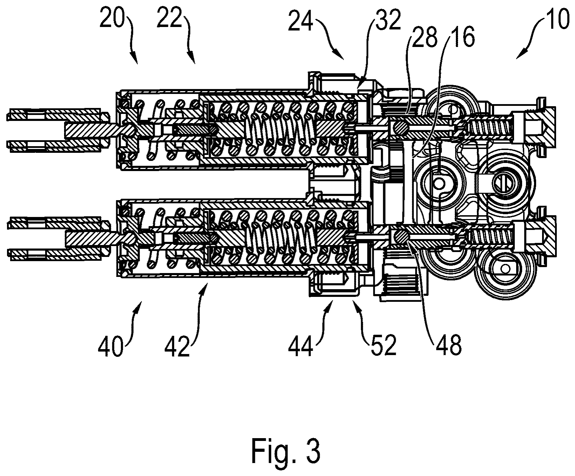

Fig. 3 schematically shows a cross-section view of the dual brake valve 10 shown in Fig. 2. The cross section shown in Fig. 3 represents only one possible embodiment of the disclosed dual brake valve 10.

### Reference signs

- 10: dual brake valve
- 12: pressure source
- 13: pressure input line
- 14: discharge output
- 15: pressure output line
- 16: pressure balancing passage
- 20: first valve section
- 22: first actuating member
- 24: first brake valve
- 26: first brake line
- 28: first check valve
- 29: first return spring
- 30: first actuation channel
- 31: first counterbalancing channel
- 32: first on/off valve
- 34: first reaction area
- 40: second valve section
- 42: second actuating member
- 44: second brake valve
- 46: second brake line
- 48: second check valve
- 49: second return spring
- 50: second actuation channel
- 51: second counterbalancing channel
- 52: second on/off valve
- 54: second reaction area
- 100: tractor
- 102: rear wheel
- 104, 106: rear brake
- 108: front wheel
- 200: braking system

## Claims

1. A dual brake valve (10) for actuating two brakes (104, 106) of a vehicle (100), the dual brake valve (10) comprising a pressure input (13), a first brake pressure output (26) for actuating a first brake (104), a second brake pressure output (46) for actuating a second brake (106), a first valve (24) fluidly connected to the pressure input (13) and configured to pressurize the first brake pressure output (26), a second valve (44) fluidly connected to the pressure input (13) and configured to pressurize the second brake pressure output (46), and a pressure balancing passage (16) configured to bidirectionally fluidly connect the first valve (24) and the second valve (44) to balance a pressure between the first brake pressure output (26) and the second brake pressure output (46), wherein the dual brake valve (10) is configured to balance a pressure between the first brake pressure output (26) and the second brake pressure output (46) by fluidly connecting the first valve (24) and the second valve (44) via the pressure balancing passage (16) such that the first valve (24) and the second valve (44) are actuated substantially equally.

2. The dual brake valve (10) according to claim 1, **characterized in that** the dual brake valve (10) comprises a first reaction area (34) configured to actuate the first valve (24) when pressurized and a second reaction area (54) configured to actuate the second valve (44) when pressurized, wherein the first reaction area (34) and the second reaction area (54) are fluidly connectable to the pressure input (13).

3. The dual brake valve (10) according to claim 2, **characterized in that** the dual brake valve (10) comprises a first counterbalancing channel (31) configured to counterbalance a force exerted by the first reaction area (34) when pressurized and a second counterbalancing channel (51) configured to counterbalance a force exerted by the second reaction area (54) when pressurized.

4. The dual brake valve (10) according to claim 2 or 3, **characterized in that** the dual brake valve (10) comprises a first check valve (28) configured to enable a flow from the first brake pressure output (26) to the second reaction area (54) via the pressure balancing passage (16), and a second check valve (48) configured to enable a flow from the second brake pressure output (46) to the first reaction area (34) via the pressure balancing passage (16).

5. The dual brake valve (10) according to claim 4, **characterized in that** the first check valve (28) is configured to enable a flow from the first brake pressure output (26) to the first reaction area (34) and the second check valve (48) is configured to enable a flow from the second brake pressure output (46) to the second reaction area (54).

6. The dual brake valve (10) according to one of the claims 2 to 5, **characterized in that** the dual brake valve (10) is configured to release a pressure from the first reaction area (34) when the first valve (24) is released, and to release a pressure from the second reaction area (54) when the second valve (44) is released.

7. The dual brake valve (10) according to one of the previous claims, **characterized in that** the first valve (24) and the second valve (44) are proportional valves.

8. The dual brake valve (10) according to one of the previous claims, **characterized in that** the dual brake valve (10) is configured to balance a pressure between the first brake pressure output (26) and the second brake pressure output (46) only when both the first valve (24) and the second valve (44) are actuated.

9. The dual brake valve (10) according to claim 8, **characterized in that** the dual brake valve (10) is configured to balance a pressure between the first brake pressure output (26) and the second brake pressure output (46) only when either of the first valve (24) or the second valve (44) is fully actuated.

10. The dual brake valve (10) according to claim 8 or 9, **characterized in that** the dual brake valve is configured to balance a pressure between the first brake pressure output (26) and the second brake pressure output (46) when the first valve (24) or the second valve (44) is released from a state in which both the first valve (24) and the second valve (44) are actuated.

11. The dual brake valve (10) according to one of the preceding claims, **characterized in that** the first valve (24) comprises five ports and four possible positions and the second valve (44) comprises five ports and four possible positions.

12. A braking system (200) of a vehicle (100), comprising a dual brake valve (10) according to one of the previous claims, and two brakes (104, 106) for braking the vehicle (100).

13. A vehicle (100) with a braking system according to claim 12.
